# EUROPEAN PATENT APPLICATION

(11) **EP 4 485 588 A1**
(43) Date of publication of application: **01.01.2025**
(21) Application number: 23759918.8
(22) Date of filing: 20.02.2023
(51) Int. Cl.: H01M 6/14, H01M 4/40, H01M 4/50, H01M 4/58, H01M 6/16

(54) **LITHIUM PRIMARY BATTERY**

(30) Priority: 22.02.2022 JP 2022025956
(71) Applicant: Panasonic Intellectual Property Management Co., Ltd., Kadoma-shi, Osaka 571-0057 (JP)
(72) Inventor: IIDA, Kazuhiro, Kadoma-shi, Osaka 571-0057 (JP); NISHITANI, Satoshi, Kadoma-shi, Osaka 571-0057 (JP); TAKEUCHI, Masanobu, Kadoma-shi, Osaka 571-0057 (JP); ASANO, Yuya, Kadoma-shi, Osaka 571-0057 (JP)
(74) Representative: Novagraaf International SA
(86) International application number: PCT/JP2023/005927
(87) International publication number: WO 2023/162917

(57) **Abstract**

A lithium primary battery includes a positive electrode, a negative electrode, and a non-aqueous electrolyte. The positive electrode includes at least one selected from the group consisting of manganese dioxide and fluorinated graphite. The negative electrode includes a lithium alloy, and the lithium alloy includes aluminum and magnesium. The total content of the aluminum and the magnesium in the lithium alloy is 0.1 mass% or more and 11 mass% or less.

## Description

### [Technical Field]

The present disclosure relates to a lithium primary battery.

### [Background Art]

Lithium primary batteries are used as power sources for various electronic devices due to their high energy densities and low self-discharge rates. As the positive electrode of a lithium primary battery, manganese dioxide or the like is used. As the negative electrode of a lithium primary battery, metallic lithium or a lithium alloy in the form of a sheet (foil) is used, for example.

Patent Literature 1 proposes a lithium primary battery including: a positive electrode including iron disulfide as a positive electrode active material; a negative electrode including a lithium alloy as a negative electrode active material; an electrode group obtained by winding the positive electrode and the negative electrode with a separator interposed therebetween; and a non-aqueous electrolyte. The lithium alloy includes at least one of magnesium and tin in an amount of 0.02 to 0.2 mol%.

Patent Literature 2 proposes a cylindrical non-aqueous electrolyte primary battery including an electrode group having a wound structure obtained by spirally winding a positive electrode containing manganese dioxide and a negative electrode with a separator interposed therebetween. The negative electrode includes, on one surface of a current collector, a metallic lithium-containing layer formed only by a single continuous layer. The metallic lithium-containing layer covers 85% or more of the area of a surface of the current collector on which the metallic lithium-containing layer is formed, and a lithium-aluminum alloy is formed on at least a part of a surface of the metallic lithium-containing layer that is located opposite to the current collector.

Patent Literature 3 proposes a lithium negative electrode of a lithium-organic electrolyte battery in which a lithium salt is dissolved in an electrolyte, and a separator is opposed to the negative electrode. A cladding layer of an aluminum-magnesium alloy is initially stacked on a surface of a lithium body adjacent to the separator, and the resulting structure is used as the negative electrode. A ternary aluminum-magnesium-lithium alloy is formed as a result of diffusion, whereby the negative electrode surface area is increased, enhancing the pulse performance of the battery.

### [Citation List]

### [Patent Literatures]

Patent Literature 1: WO 2012/066709
Patent Literature 2: Japanese Laid-Open Patent Publication No. 2012-13 8225
Patent Literature 3: Japanese Laid-Open Patent Publication No. S58-209862

### [Summary of Invention]

### [Technical Problem]

A lithium primary battery may experience a reduction in capacity of the battery due to deterioration of the negative electrode.

### [Solution to Problem]

An aspect of the present disclosure relates to a lithium primary battery including: a positive electrode; a negative electrode; and a non-aqueous electrolyte, wherein the positive electrode includes at least one selected from the group consisting of manganese dioxide and fluorinated graphite, the negative electrode includes a lithium alloy, the lithium alloy includes aluminum and magnesium, and a total content of the aluminum and the magnesium in the lithium alloy is 0.1 mass% or more and 11 mass% or less.

### [Advantageous Effects of Invention]

According to the present disclosure, it is possible to suppress a reduction in capacity of a lithium primary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

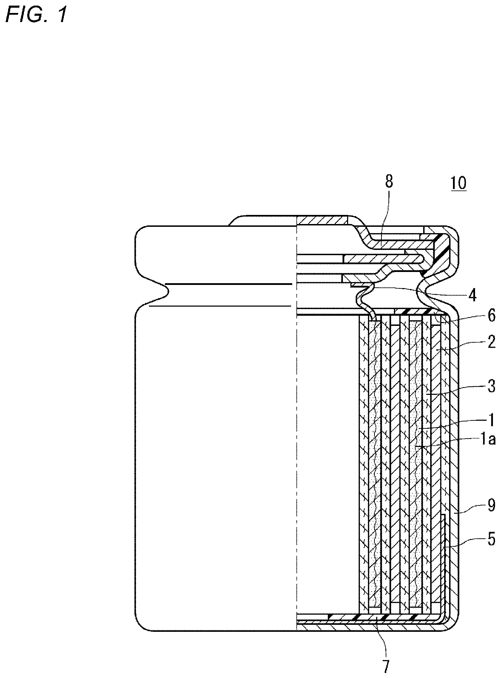

[FIG. 1] A front view, partly in cross section, of a lithium primary battery according to an embodiment of the present disclosure.

### [Description of Embodiments]

In the following, embodiments of the present disclosure will be described by way of examples. However, the present disclosure is not limited to the examples described below. Although examples of specific numerical values and materials may be given in the following description, other numerical values and materials may be used as long as the effects of the present disclosure can be achieved. In the present specification, the expression "from a numerical value A to a numerical value B" includes the numerical value A and the numerical value B, and can be read as "a numerical value A or more and a numerical value B or less". In the following description, when examples of the lower and upper limits of a numerical value related to a specific physical property, condition, or the like are given, any one of the given examples of the lower limit and any one of the given examples of the upper limit can be freely combined as long as the lower limit is not equal to or not greater than the upper limit. When a plurality of materials are given as examples, one of the materials may be selected and used alone, or two or more of the materials may be used in combination.

A lithium primary battery according to an embodiment of the present disclosure includes a positive electrode, a negative electrode, and a non-aqueous electrolyte. The positive electrode includes at least one selected from the group consisting of manganese dioxide and fluorinated graphite. The negative electrode includes a lithium alloy, and the lithium alloy includes aluminum and magnesium. The total content of the aluminum and the magnesium in the lithium alloy is 0.1 mass% or more and 11 mass% or less. The Al and the Mg are present in a mixed state in the lithium alloy.

When the lithium alloy includes Al, a side reaction due to contact between the negative electrode and the non-aqueous electrolyte is suppressed, and a reduction in capacity due such a side reaction is suppressed. On the other hand, the Al is likely to undergo segregation in the lithium alloy. The segregation of the Al may lead to nonuniform consumption of the Li in the negative electrode surface during discharge, and the negative electrode may be partially lost or broken at the end of discharge, resulting in a reduction in capacity.

In contrast, when Mg and Al are present in a mixed state in the lithium alloy, the segregation of the Al in the lithium alloy is suppressed, so that the above-described side reaction suppressing effect of the Al can be stably achieved throughout the negative electrode, and the Li is uniformly consumed on the negative electrode surface. Deterioration of the negative electrode due to the Al segregation in the negative electrode is suppressed, and the Li, which is capable of contributing to the discharge reaction, is secured in a sufficient amount even at the end of discharge, thus suppressing a reduction in capacity. Accordingly, a high capacity can be obtained both at the initial stage and after long-term storage. However, when the total content of the Al and the Mg in the lithium alloy is less than 0.1 mass%, the effect of the Al and the Mg cannot be sufficiently achieved, so that the capacity is likely to be reduced. When the total content of the Al and the Mg in the lithium alloy is greater than 11 mass%, the amount of the Li occupying the negative electrode is reduced, so that the absolute quantity of Li is reduced, as a result of which the capacity may be reduced.

If the lithium alloy includes Mg and does not include Al, Mg provides a smaller effect of suppressing a side reaction than that provided by Al, so that deterioration due to the side reaction advances, resulting in a reduction in capacity.

If a positive electrode including iron disulfide is used for a negative electrode including a lithium alloy including Al and Mg, the capacity is likely to be reduced after long-term storage. This seems to be due to the facts that: Fe and S are eluted from the positive electrode including iron disulfide, thus causing a side reaction between Al and Mg in the negative electrode; and the side reaction results in formation of a coating including Fe and S on the negative electrode surface, and the coating makes the negative electrode reaction nonuniform.

If a Mg layer is disposed on the surface of a lithium alloy foil including Al, the Al and the Mg are not present in a mixed state in the lithium alloy foil, so that the effect of suppressing segregation of the Al by the Mg cannot be achieved, resulting in a reduction in capacity.

If an Al-Mg alloy layer is disposed on the surface of a negative electrode (metallic lithium foil), the Al and the Mg are not present in a mixed state in the metallic lithium foil, so that the above-described effect of the Al and the Mg cannot be achieved in a stable and uniform manner throughout the negative electrode, resulting in a reduction in capacity.

### (Negative Electrode)

The lithium alloy used for the negative electrode is in the form of a foil (sheet), for example. The lithium alloy includes both Al and Mg. The total content of the Al and the Mg in the lithium alloy is 0.1 mass% or more and 11 mass% or less, and may be 0.2 mass% or more and 11 mass% or less, or 0.2 mass% or more and 5 mass% or less.

The Mg content (or the Al content) in the lithium alloy may be 0.05 mass% or more (or 0.1 mass% or more) and 10 mass% or less, 0.1 mass% or more and 5 mass% or less, or 0.1 mass% or more (or 0.5 mass% or more) and 3 mass% or less. The molar ratio: Mg/Al of the Mg to the Al may be, for example, 0.05 or more and 20 or less, or 0.1 or more and 10 or less.

The Al content and the Mg content in the lithium alloy can be determined by inductively coupled plasma (ICP) emission spectrometry.

The lithium alloy may include metallic elements other than Li, Al, and Mg. The other elements include Sn, Ni, Pb, In, and K. The content of all metallic elements included in the lithium alloy other than lithium is preferably 0.1 mass% or more and 15 mass% or less, from the viewpoint of securing of the discharge capacity and stabilization of the internal resistance. The composition of the lithium alloy can be analyzed by ICP emission spectrometry.

### (Additive of Non-Aqueous Electrolyte)

Preferably, the non-aqueous electrolyte includes at least one additive selected from the group consisting of a cyclic imide compound, a phthalic acid ester compound, and an isocyanate compound. When the non-aqueous electrolyte includes the above-described additive, a composite coating containing Al and Mg derived from the lithium alloy and a component derived from the additive may be formed on the surface of the lithium alloy (negative electrode) including the Al and the Mg. Since the coating has excellent chemical stability and also includes the Al and the Mg derived from the lithium alloy, the wettability of the negative electrode with the non-aqueous electrolyte is improved, reducing the resistance of the negative electrode. The coating allows the Li to be more uniformly consumed on the negative electrode surface. As a result, a reduction in capacity is further likely to be suppressed.

The content of the additive in the non-aqueous electrolyte is, for example, 0.01 mass% or more and 5 mass% or less. Note that the content of the additive in the non-aqueous electrolyte is the mass ratio (percentage) of the additive to the entire non-aqueous electrolyte. For example, immediately after manufacturing the battery (or at the time of preparing the non-aqueous electrolyte), the content of the additive in the non-aqueous electrolyte is preferably within the above-described range. In contrast, in the battery after an elapse of a certain period of time after manufacture, a part of the additive is consumed by formation of the coating, and the content of the additive in the non-aqueous electrolyte may have a value smaller than the above-described range. In this case, the above-described effect of the additive is observed even when the content of the additive in the non-aqueous electrolyte is small (e.g., a value closer to the detection limit). The same applies to the contents of various compounds, such as a cyclic imide compound, described later.

### (Cyclic Imide Compound)

Examples of the cyclic imide compound include a cyclic diacylamine compound. The cyclic imide compound may include a diacylamine ring (hereinafter also referred to as an imide ring). Another ring (hereinafter also referred to as a second ring) may be fused to the imide ring. The cyclic imide compound may be included in the non-aqueous electrolyte either in the state of an imide, or in the form of an anion or a salt. When the cyclic imide compound is included in the state of an imide in the non-aqueous electrolyte, the cyclic imide compound may be included in a form having a free NH group, or in the form of a tertiary amine.

Examples of the second ring include an aromatic ring, and a saturated or unsaturated aliphatic ring. At least one heteroatom may be included in the second ring. Examples of the heteroatom include an oxygen atom, a sulfur atom, and a nitrogen atom.

Examples of the cyclic imide compound include an aliphatic dicarboxylic acid imide compound and a cyclic imide compound having the second ring. Examples of the aliphatic dicarboxylic acid imide compound include succinimide. Examples of the cyclic imide compound having the second ring include an imide compound of aromatic or alicyclic dicarboxylic acid. Examples of the aromatic dicarboxylic acid or the alicyclic dicarboxylic acid include those having a carboxy group on each of two adjacent atoms constituting the ring. Examples of the cyclic imide compound having the second ring include phthalimide, and a hydrogenated product of phthalimide. Examples of the hydrogenated product of phthalimide include cyclohex-3-ene-1,2-dicarboximide and cyclohexane-1,2-dicarboximide.

The imide ring may be a N-substituted imide ring having a substituent on the nitrogen atom of the imide. Examples of such a substituent include a hydroxy group, an alkyl group, an alkoxy group, and a halogen atom. Examples of the alkyl group include a C1-C4 alkyl group, and the alkyl group may be a methyl group, an ethyl group, or the like. Examples of the alkoxy group include a C1-C4 alkoxy group, and the alkoxy group may be a methoxy group, an ethoxy group, or the like. Examples of the halogen atom include a chlorine atom and a fluorine atom.

The cyclic imide compound is preferably at least one selected from the group consisting of phthalimide and N-substituted phthalimide. The substituent on the nitrogen atom of the N-substituted phthalimide can be selected from the substituents exemplified for the N-substituted imide ring. Preferably, the N-substituted phthalimide includes at least one selected from the group consisting of, for example, N-hydroxyphthalimide, N-(cyclohexylthio)phthalimide, and N-(phenylthio)phthalimide. The phthalimide and/or the N-substituted phthalimide may constitute 50 mass% or more, even constitute 70 mass% or more, or 90 mass% or more of the cyclic imide compound. The cyclic imide compound may be N-(2-hydroxyethyl)phthalimide.

The non-aqueous electrolyte may include one cyclic imide compound, or may include two or more cyclic imide compounds. The content of the cyclic imide compound in the non-aqueous electrolyte may be 1 mass% or less, 0.001 mass% or more and 1 mass% or less, or 0.001 mass% or more and 0.8 mass% or less.

### (Phthalic Acid Ester Compound)

The phthalic acid ester compound includes phthalic acid ester and a derivative thereof. The derivative may have a substituent bound to an aromatic ring derived from phthalic acid. Examples of such a substituent include a hydroxy group, an alkyl group, an alkoxy group, and a halogen atom. Examples of the alkyl group include a C1-C4 alkyl group, and the alkyl group may be a methyl group, an ethyl group, or the like. Examples of the alkoxy group include a C1-C4 alkoxy group, and the alkoxy group may be a methoxy group, an ethoxy group, or the like. Examples of the halogen atom include a chlorine atom and a fluorine atom.

The phthalic acid ester compound may be a phthalic acid monoester compound, but is preferably a phthalic acid diester compound, in terms of the fact that the coating produced can easily protect the Li alloy surface. The alcohol that forms an ester with phthalic acid (or a derivative thereof) is preferably a C1-C20 (preferably C1-C6) saturated or unsaturated aliphatic alcohol.

Specific examples examples of the phthalic acid diester compound include dimethyl phthalate, diethyl phthalate, diallyl phthalate, dibutyl phthalate, diisobutyl phthalate, and bis(2-ethylhexyl)phthalate. These may be used alone or in combination of two or more thereof. The phthalic acid diester compound may constitute 50 mass% or more, even 70 mass% or more, or 90 mass% or more of the phthalic acid ester compound.

The non-aqueous electrolyte may include one phthalic acid ester compound, or may include two or more phthalic acid ester compounds. The content of the phthalic acid ester compound in the non-aqueous electrolyte may be 1 mass or less, or 0.1 mass% or more and 1 mass% or less.

### (Isocyanate Compound)

The isocyanate compound includes, for example, at least one isocyanate group, a C1-C20 aliphatic hydrocarbon group or a C6-C20 aromatic hydrocarbon group. The aliphatic hydrocarbon group and the aromatic hydrocarbon group constituting the isocyanate compound may have a substituent. The substituent may be any group that can be stably present, and may be, for example, a halogen atom or a nitrile group. The aliphatic group may be an alicyclic aliphatic group, or a linear or branched aliphatic group. The aromatic hydrocarbon group is a hydrocarbon group having one or more aromatic rings, and may be a group having an aromatic ring linked to an aliphatic group.

The isocyanate compound may be a monoisocyanate compound having one isocyanate group, but is preferably a diisocyanate compound having two isocyanate groups. The diisocyanate compound is considered to produce a composite coating having higher chemical stability than that of a composite coating produced by a monoisocyanate compound, and to produce a composite coating having a lower resistance than that of a composite coating produced by triisocyanate. The diisocyanate compound exhibits high ability to form a composite coating even in a small amount, and has excellent stability in the battery.

Specific examples of the diisocyanate compound include a compound represented by OCN-CₙH₂ₙ-NCO, where n is an integer of 1 to 10 (e.g., hexamethylene diisocyanate), a compound having an alicyclic diyl group (e.g., 1,3-bis(isocyanatomethyl)cyclohexane, dicyclohexylmethane-4,4'-diisocyanate, bicyclo[2.2.1]heptane-2,5-diylbis(methyl isocyanate), bicyclo[2.2.1]heptane-2,6-diylbis(methyl isocyanate), isophorone diisocyanate), 2,2,4-trimethylhexamethylene diisocyanate, 2,4,4-trimethylhexamethylene diisocyanate, and hexyl isocyanate. Among these, at least one selected from the group consisting of hexamethylene diisocyanate, 1,3-bis(isocyanatomethyl)cyclohexane, and isophorone diisocyanate is preferred. These may constitute 50 mass% or more, even 70 mass% or more, or 90 mass% or more of the isocyanate compound.

In the case of adding diisocyanate compounds in the non-aqueous electrolyte, the diisocyanate compounds may react with each other inside the battery (in the non-aqueous electrolyte), to form an isocyanurate, a urea, or a biuret. Therefore, in the case of disassembling the battery and analyzing the non-aqueous electrolyte, an isocyanurate, a urea, or a biuret derived from the diisocyanate compounds may be detected.

The non-aqueous electrolyte may include one isocyanate compound, or may include two or more isocyanate compounds. The content of the isocyanate compound in the non-aqueous electrolyte may be 3 mass% or less, 0.01 mass% or more and 2 mass% or less, or 0.01 mass% or more and 1.5 mass% or less.

For example, liquid chromatography mass spectrometry (LC/MS) or gas chromatography-mass spectrometry (GC/MS) can be used to analyze the non-aqueous electrolyte (additive). Ultraviolet (UV) spectroscopy may be performed together with nuclear magnetic resonance (NMR) spectroscopy, infrared absorption (IR) spectroscopy, or mass spectrometry (MS).

Hereinafter, the lithium primary battery according to the present disclosure will be described more specifically.

### [Lithium Primary Battery]

### (Positive Electrode)

The positive electrode includes, as a positive electrode active material, at least one selected from the group consisting of manganese dioxide and fluorinated graphite. As the manganese dioxide, electrolytic manganese dioxide is preferably used. A positive electrode including manganese dioxide develops a relatively high voltage, and has excellent pulse discharge characteristics. The manganese dioxide may be in the state of a mixed crystal including a plurality types of crystals. The positive electrode may include a manganese oxide other than manganese dioxide. Examples of the manganese oxide other than manganese dioxide include MnO, Mn₃O₄, Mn₂O₃, and NM₂O₇. The main component of the manganese oxide included in the positive electrode is preferably manganese dioxide. As used herein, being a main component means that the proportion of the manganese dioxide in the manganese oxide is 50 mass% or more. The proportion of the manganese dioxide in the manganese oxide may be 70 mass% or more, or 90 mass% or more.

The positive electrode may include a positive electrode mixture containing a positive electrode active material, a binder, a conductive agent, and so forth. Examples of the binder include a fluorocarbon resin such as polytetrafluoroethylene, rubber particles, and an acrylic resin. Examples of the conductive agent include a conductive carbon material. Examples of the conductive carbon material include natural graphite, artificial graphite, carbon black, and carbon fibers.

The positive electrode may further include a positive electrode current collector that holds the positive electrode mixture. Examples of the material of the positive electrode current collector include stainless steel, aluminum, and titanium.

In the case of a coin-shaped battery, the positive electrode may be formed by mounting a ring-shaped positive electrode current collector having an L-shaped cross section to a positive electrode mixture pellet, or the positive electrode may be formed by a positive electrode mixture pellet alone. The positive electrode mixture pellet can be obtained, for example, by compression molding a wet positive electrode mixture, which has been prepared by adding a proper amount of water to the positive electrode active material and the additive, and drying the positive electrode mixture.

In the case of a cylindrical battery, it is possible to use a positive electrode including a sheet-like positive electrode current collector, and a positive electrode mixture layer held on the positive electrode current collector. As the sheet-like positive electrode current collector, a porous current collector is preferred. Examples of the porous current collector include expanded metal, a net, and punched metal. The positive electrode mixture layer can be obtained, for example, by applying the above-described wet positive electrode mixture to the surface of the sheet-like positive electrode current collector, or filling the wet positive electrode mixture into the positive electrode current collector, then pressurizing the positive electrode current collector in the thickness direction thereof, followed by drying.

### (Negative Electrode)

A lithium alloy including Al and Mg is used for the negative electrode. The lithium alloy is molded to have any shape and any thickness according to the shape, dimensions, standard performance, and the like of the lithium primary battery. Since the lithium alloy includes Mg, the Mg, which has a relatively high strength remains at the end of discharge, so that it is possible to form a negative electrode using only a lithium alloy sheet (foil), without using a current collector such as a copper foil for the negative electrode. In the case of using a lithium alloy including both Al and Mg, the Li in the negative electrode can be effectively used to the fullest, so that the discharge capacity can be significantly increased as compared with a case where metallic lithium, or a lithium alloy including only one of Al and Mg is used.

In the case of a coin-shaped battery, a hoop-shaped lithium alloy that has been punched out into a circular disk shape may be used for the negative electrode. In the case of a cylindrical battery, a lithium alloy in the form of a sheet may be used for the negative electrode. The sheet can be obtained by extrusion molding, for example. More specifically, in the case of a cylindrical battery, a lithium alloy foil or the like having a shape having a longitudinal direction and a transverse direction is used.

### (Non-Aqueous Electrolyte)

The non-aqueous electrolyte includes, for example, a non-aqueous solvent and lithium salts. The concentration of the lithium ions (the total concentration of lithium salts) contained in the non-aqueous electrolyte is, for example, 0.2 mol/L or more and 2.0 mol/L or less, and may be 0.3 mol/L or more and 1.5 mol/L or less.

### (Non-Aqueous Solvent)

Examples of the non-aqueous solvent include organic solvents commonly used for non-aqueous electrolytes of lithium primary batteries. Examples of the non-aqueous solvent include ether, ester, and carbonic acid ester. As the non-aqueous solvent, it is possible to use dimethyl ether, γ-butyl lactone, propylene carbonate (PC), ethylene carbonate (EC), 1,2-dimethoxyethane (DME), and the like. The non-aqueous electrolyte may include one non-aqueous solvent, or may include two or more non-aqueous solvents.

From the viewpoint of improving the discharge characteristics of the lithium primary battery, the non-aqueous solvent preferably includes a cyclic carbonic acid ester having a high boiling point, and a chain ether having a low viscosity even at low temperatures. The cyclic carbonic acid ester preferably includes at least one selected from the group consisting of PC and EC, and PC is particularly preferred. The chain ether preferably includes DME.

### (Lithium salt)

The non-aqueous electrolyte may include a lithium salt. Examples of the lithium salt include lithium salts used as solutes in lithium primary batteries. Examples of such lithium salts include LiCF₃SO₃, LiClO₄, LiBF₄, LiPF₆, and LiRaSO₃, where Ra is a fluorinated alkyl group having 1 to 4 carbon atoms, LiFSO₃, LiN(SO₂Rb)(SO₂Rc), where Rb and Rc are each independently a fluorinated alkyl group having 1 to 4 carbon atoms, LiN(FSO₂)₂, LiN(SO₂CF₃)₂, LiN(SO₂F)(POF₂), LiPO₂F₂, LiB(C₂O₄)₂, and LiBF₂(C₂O₄). Among these, at least one selected from the group consisting of LiCF₃SO₃, LiBF₄, and LiN(FSO₂)₂ is preferred, from the viewpoint of the stability for the lithium alloy including Al and Mg. The non-aqueous electrolyte may contain one, or two or more of these lithium salts.

### (Others)

The non-aqueous electrolyte may further include an additional component such as the above-described additive. The additional component may be a lithium salt, and may be capable of producing lithium ions. Examples of the additional component other than the above-described additive include propane sultone, propene sultone, 3,2-dioxathiolane-2,2-dioxide, vinylene carbonate, fluoroethylene carbonate, adiponitrile, and succinonitrile.

### (Separator)

The lithium primary battery usually includes a separator interposed between the positive electrode and the negative electrode. As the separator, a porous sheet made of an insulating material that is resistant to the internal environment of the lithium primary battery may be used. Specific examples thereof include a non-woven fabric made of synthetic resin, a microporous film made of synthetic resin, or laminates thereof.

Examples of the synthetic resin that can be used for the non-woven fabric include polypropylene, polyphenylene sulfide, and polybutylene terephthalate. Examples of the synthetic resin that can be used for the microporous film include polyolefin resins such as polyethylene, polypropylene, and an ethylene-propylene copolymer. The microporous film may contain inorganic particles, as necessary.

The thickness of the separator is, for example, 5 µm or more and 100 µm or less.

The structure of the lithium primary battery is not particularly limited. The lithium primary battery may be a coin-shaped battery including a stacked electrode group formed by stacking a circular plate-shaped positive electrode and a circular plate-shaped negative electrode with a separator interposed therebetween. The lithium primary battery may be a cylindrical battery including a wound electrode group formed by spirally winding a band-shaped positive electrode and a band-shaped negative electrode with a separator interposed therebetween.

FIG. 1 shows a front view, partly in cross section, of a cylindrical lithium primary battery according to an embodiment of the present disclosure. A lithium primary battery 10 includes an electrode group obtained by winding a positive electrode 1 and a negative electrode 2 with a separator 3 interposed therebetween, and the electrode group is housed in a battery case 9 together with a non-aqueous electrolyte (not shown). A sealing plate 8 is mounted to the opening of the battery case 9. A positive electrode lead 4 connected to a current collector 1a of the positive electrode 1 is connected to the sealing plate 8. A negative electrode lead 5 connected to the negative electrode 2 is connected to the battery case 9. In addition, an upper insulating plate 6 and a lower insulating plate 7 are disposed above and below, respectively, the electrode group in order to prevent an internal short circuit.

### [Examples]

Hereinafter, the present disclosure will be specifically described by way of examples and comparative examples. However, the present disclosure is not limited to the following examples.

### <<Examples 1 to 9, Comparative Examples 4 and 5»

### (Production of Positive Electrode)

To 100 parts by mass of electrolytic manganese dioxide (MnO₂) serving as a positive electrode active material, 5 parts by mass of Ketjen black serving as a conductive agent, 5 parts by mass of polytetrafluoroethylene serving as a binder, and a proper amount of pure water were added, and the mixture was kneaded, to prepare a wet positive electrode mixture.

Next, the positive electrode mixture was filled into a positive electrode current collector formed by 0.1-mm-thick expanded metal made of stainless steel (SUS 444), to produce a positive electrode precursor. Thereafter, the positive electrode precursor was dried, rolled with a roll press, and cut into a size of 3.5 cm in length and 20 cm in width, to obtain a positive electrode. Subsequently, a part of the filled positive electrode mixture was stripped off, and one end portion of a positive electrode lead made of SUS 444 was welded by resistance welding to the portion where the positive electrode current collector was exposed.

### (Production of Negative Electrode)

A lithium alloy foil (thickness: 250 µm) was cut into a size of 3.7 cm in length and 22 cm in width, to obtain a negative electrode. One end portion of a negative electrode lead made of nickel was connected by pressure welding to a predetermined portion of the negative electrode. As the lithium alloy foil, a lithium alloy foil having an Al content and a Mg content with the values shown in Table 1 was used.

### (Production of Electrode Group)

The positive electrode and the negative electrode were wound with e a separator interposed therebetween, to produce an electrode group. As the separator, a 25 µm-thick microporous film made of polypropylene was used.

### (Preparation of Non-Aqueous Electrolyte)

In a solvent mixture of PC, EC, and DME (volume ratio: 3:2:5), LiCF₃SO₃ was dissolved at a concentration of 0.5 mol/L, to prepare a non-aqueous electrolyte.

### (Assembly of Lithium Primary Battery)

The electrode group was housed in a cylindrical battery case also serving as a negative electrode terminal. As the battery case, an iron case (outer diameter: 17 mm, height: 45.5 mm) was used. Then, the non-aqueous electrolyte was injected into the battery case, and thereafter the opening of the battery case was closed using a metal sealing plate also serving as a positive electrode terminal. The other end portion of the positive electrode lead was connected to the sealing plate, and the other end portion of the negative electrode lead was connected to the inner bottom surface of the battery case. In this manner, a lithium primary battery was produced. Note that A1 to A9 in Table 1 denote batteries of Examples 1 to 9. B4 and B5 denote batteries of Comparative Examples 4 and 5.

### <<Example 10»

In the production of the negative electrode, a lithium alloy foil including 0.2 mass% of Mg and 0.1 mass% of Al was used. As the positive electrode active material, fluorinated graphite was used in place of the electrolytic manganese dioxide. Except for the foregoing, a battery A10 of Example 10 was produced in the same manner as the battery A1 of Example 1.

### <<Comparative Example 1>>

A battery B1 of Comparative Example 1 was produced in the same manner as the battery A1 of Example 1 except that a metallic lithium foil that did not include Al and Mg was used in the production of the negative electrode.

### <<Comparative Example 2>>

A battery B2 of Comparative Example 2 was produced in the same manner as the battery A1 of Example 1 except that a lithium alloy foil that included 0.5 mass% of Al and did not include Mg was used in the production of the negative electrode.

### «Comparative Example 3»

A battery B3 of Comparative Example 3 was produced in the same manner as the battery A1 of Example 1 except that a lithium alloy foil that included 0.5 mass% of Mg and did not include Al was used in the production of the negative electrode.

### «Comparative Example 6»

A battery B6 of Comparative Example 6 was produced in the same manner as the battery A5 of Example 5 except that iron disulfide was used in place of the electrolytic manganese dioxide as the positive electrode active material.

Each of the obtained batteries of the examples and the comparative examples was aged for 3 days in an atmosphere at 45°C after assembly, and then evaluated as follows.

### [Evaluation]

### (Initial Capacity)

In an environment at 20°C, each of the aged batteries was subjected to constant-current discharge at 2.5 mA until the battery voltage reached 0.9 V The discharge time at this time was measured, and the initial initial capacity was determined.

### (Capacity After Storage)

Each of the aged batteries was stored for 3 months in an environment at 85°C. In an environment at 20°C, each of the stored batteries was subjected to constant-current discharge at 2.5 mA until the battery voltage reached 0.9 V The discharge time at this time was measured, and the capacity after storage was determined.

### (Capacity Deterioration Rate After Storage)

Using the initial capacity and the capacity after storage obtained as described above, the capacity deterioration rate after storage was determined using the following formula: Capacity deterioration rate after storage (%) = {1 - (Capacity after storage/Initial capacity)} × 100

The evaluation results are shown in Table 1. Note that the initial capacities and the capacities after storage in Table 1 are shown as relative value (indices), with the initial capacity of the battery B2 of Comparative Example 2 taken as 100.

**[Table 1]**

| Li primary battery | Positive electrode active material | Negative electrode active material (Li alloy) | | | | Evaluation | | |
|---|---|---|---|---|---|---|---|---|
| | | Al content (mass%) | Mg content (mass%) | Al + Mg content (mass%) | Mg/Al molar ratio | Initial capacity (index) | Capacity after storage (index) | Capacity deterioration rate after storage (%) |
| A1 | MnO₂ | 0.1 | 0.1 | 0.2 | 1 | 105 | 99 | 5.7 |
| A2 | MnO₂ | 0.2 | 0.5 | 0.7 | 2.5 | 111 | 104 | 6.3 |
| A3 | MnO₂ | 0.2 | 2 | 2.2 | 10 | 107 | 101 | 5.6 |
| A4 | MnO₂ | 1.0 | 0.1 | 1.1 | 0.1 | 108 | 102 | 5.5 |
| A5 | MnO₂ | 0.5 | 0.5 | 1 | 1 | 110 | 103 | 6.4 |
| A6 | MnO₂ | 2 | 2 | 4 | 1 | 107 | 100 | 6.5 |
| A7 | MnO₂ | 5 | 5 | 10 | 1 | 106 | 98 | 7.5 |
| A8 | MnO₂ | 0.5 | 10 | 10.5 | 20 | 102 | 96 | 5.9 |
| A9 | MnO₂ | 10 | 0.8 | 10.8 | 0.08 | 103 | 95 | 7.8 |
| A10 | (CF)ₙ | 0.2 | 0.1 | 0.3 | 0.5 | 103 | 94 | 8.7 |
| B1 | MnO₂ | 0 | 0 | 0 | | 101 | 80 | 21.0 |
| B2 | MnO₂ | 0.5 | 0 | 0.5 | 0 | 100 | 90 | 10.0 |
| B3 | MnO₂ | 0 | 0.5 | 0.5 | | 95 | 81 | 14.7 |
| B4 | MnO₂ | 0.5 | 12 | 12.5 | 24 | 85 | 73 | 14.1 |
| B5 | MnO₂ | 12 | 0.5 | 12.5 | 0.04 | 80 | 62 | 22.5 |
| B6 | FeS₂ | 0.5 | 0.5 | 1 | 1 | 120 | 55 | 54.2 |

For the batteries A1 to A10, the initial capacities and the capacities after storage were high, and low capacity deterioration rates were achieved.

For the battery B2, which used the Li alloy having an Al content of 0.5 mass%, the initial capacity was reduced by about 1% and the capacity after storage was increased by 12.5%, relative to the battery B1 (B1→B2). For the battery B3, which used the Li alloy having a Mg content of 0.5 mass%, the initial capacity was reduced by about 5.9% and the capacity after storage was increased by about 1.3%, relative to the battery B1 (B1→B3).

In contrast, for the battery A5, which used the Li alloy having an Al content of 0.5 mass% and a Mg content of 0.5 mass%, the initial capacity was significantly increased by about 8.9% and the capacity after storage was significantly increased by about 28.8%, relative to the battery B1 (B1→A5). For the battery A5, the initial capacity and the capacity after storage were significantly increased as compared with those of the batteries B2 and B3.

For the batteries B4 and B5, each of which had a total content of Al and Mg greater than 11 mass%, the initial capacities and the capacities after storage were low, and the capacity deterioration rates were increased. For the battery B6, due to using FeS₂ as the positive electrode active material, the capacity after storage was significantly reduced, and the capacity deterioration rate was significantly increased.

### «Examples 11 to 18»

In the preparation of the non-aqueous electrolyte, an additive was further included in the non-aqueous electrolyte. As the additive, the compounds shown in Table 2 were used. The contents of the additive in the non-aqueous electrolyte have the values shown in Table 2.

Except for the foregoing, batteries A11 to A18 of Examples 11 to 18 were produced in the same manner as the battery A5 of Example 5, and evaluated. The evaluation results are shown in Table 2.

Note that the initial capacities and the capacities after storage in Table 2 are shown as relative values (indices), with the initial capacity of the battery B2 of Comparative Example 2 taken as 100.

**[Table 2]**

| Li primary battery | Positive electrode active material | Negative electrode active material (Li alloy) | | Electrolyte Additive | | Evaluation | | |
|---|---|---|---|---|---|---|---|---|
| | | Al content (mass%) | Mg content (mass%) | Compound | Content (mass%) | Initial capacity (index) | Capacity after storage (index) | Capacity deterioration rate after storage (%) |
| A5 | MnO₂ | 0.5 | 0.5 | - | - | 110 | 103 | 6.4 |
| A11 | MnO₂ | 0.5 | 0.5 | Phthalimide | 0.5 | 113 | 109 | 3.5 |
| A12 | MnO₂ | 0.5 | 0.5 | N-Hydroxyphthalimide | 0.5 | 111 | 106 | 4.5 |
| A13 | MnO₂ | 0.5 | 0.5 | N-(Cyclohexylthio)phthalimide | 0.5 | 110 | 105 | 4.5 |
| A14 | MnO₂ | 0.5 | 0.5 | N-(Phenylthio)phthalimide | 0.5 | 110 | 105 | 4.5 |
| A15 | MnO₂ | 0.5 | 0.5 | Hexamethylene diisocyanate | 1.0 | 114 | 109 | 4.4 |
| A16 | MnO₂ | 0.5 | 0.5 | 1,3-Bis(isocyanatomethyl)cyclohexane | 1.0 | 114 | 109 | 4.4 |
| A17 | MnO₂ | 0.5 | 0.5 | Isophorone diisocyanate | 1.0 | 113 | 107 | 5.3 |
| A18 | MnO₂ | 0.5 | 0.5 | Dimethyl phthalate | 1.0 | 113 | 106 | 6.2 |

For the batteries A11 to A18, in each of which a predetermined additive was included in the non-aqueous electrolyte, the initial capacities and the capacities after storage were high, and the capacity deterioration rate was further reduced.

### [Industrial Applicability]

A lithium primary battery according to the present disclosure can be suitably used, for example, as a main power source and a memory backup power source for various meters (e.g., smart meters for electricity, water, gas, etc.).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 1: Positive electrode
- 1a: Positive electrode current collector
- 2: Negative electrode
- 3: Separator
- 4: Positive electrode lead
- 5: Negative electrode lead
- 6: Upper insulating plate
- 7: Lower insulating plate
- 8: Sealing plate
- 9: Battery case
- 10: Lithium primary battery

## Claims

1. A lithium primary battery comprising:
a positive electrode; a negative electrode; and a non-aqueous electrolyte, wherein
the positive electrode includes at least one selected from the group consisting of manganese dioxide and fluorinated graphite,
the negative electrode includes a lithium alloy,
the lithium alloy includes aluminum and magnesium, and
a total content of the aluminum and the magnesium in the lithium alloy is 0.1 mass% or more and 11 mass% or less.

2. The lithium primary battery according to claim 1, wherein the total content of the aluminum and the magnesium in the lithium alloy is 0.2 mass% or more and 5 mass% or less.

3. The lithium primary battery according to claim 1 or 2, wherein a molar ratio of the magnesium to the aluminum in the lithium alloy is 0.1 or more and 10 or less.

4. The lithium primary battery according to any one of claims 1 to 3, wherein the non-aqueous electrolyte includes at least one additive selected from the group consisting of a cyclic imide compound, a phthalic acid ester compound, and an isocyanate compound.

5. The lithium primary battery according to claim 4, wherein the cyclic imide compound includes at least one selected from the group consisting of phthalimide and N-substituted phthalimide.

6. The lithium primary battery according to claim 5, wherein the N-substituted phthalimide includes at least one selected from the group consisting of N-hydroxyphthalimide, N-(cyclohexylthio)phthalimide, and N-(phenylthio)phthalimide.

7. The lithium primary battery according to any one of claims 4 to 6, wherein a content of the cyclic imide compound in the non-aqueous electrolyte is 1 mass% or less.

8. The lithium primary battery according to any one of claims 4 to 7, wherein the phthalic acid ester compound includes a phthalic acid diester compound.

9. The lithium primary battery according to claim 8, wherein the phthalic acid diester compound includes dimethyl phthalate.

10. The lithium primary battery according to any one of claims 4 to 9, wherein a content of the phthalic acid ester compound in the non-aqueous electrolyte is 1 mass% or less.

11. The lithium primary battery according to any one of claims 4 to 10, wherein the isocyanate compound includes a diisocyanate compound.

12. The lithium primary battery according to claim 11, wherein the diisocyanate compound includes at least one selected from the group consisting of hexamethylene diisocyanate, 1,3-bis(isocyanatomethyl)cyclohexane, and isophorone diisocyanate.

13. The lithium primary battery according to any one of claims 4 to 12, wherein a content of the isocyanate compound in the non-aqueous electrolyte is 3 mass% or less.
